Europäisches Patentamt

European Patent Office

Office européen des brevets

(11) Publication number: **0 471 463 A2**

## EUROPEAN PATENT APPLICATION

(21) Application number: **91306852.4**

(51) Int. Cl.[5]: **C08J 3/20**

(22) Date of filing: **26.07.91**

(30) Priority: **31.07.90 US 560639**

(43) Date of publication of application:
**19.02.92 Bulletin 92/08**

(84) Designated Contracting States:
**AT BE CH DE DK ES FR GB GR IT LI LU NL SE**

(71) Applicant: **SHELL OIL COMPANY**
**900, Louisiana Street**
**Houston Texas 77002 (US)**

(72) Inventor: **Chatterjee, Ananda M.**
**14411 Locke Lane**
**Houston, Texas 77077 (US)**
Inventor: **Chang, David S.**
**12131 Meadow Lane**
**Houston, Texas 77077 (US)**

(74) Representative: **Myerscough, Philip Boyd et al**
**J.A. Kemp & Co. 14 South Square, Gray's Inn**
**London WC1R 5LX (GB)**

(54) **Process for incorporating additives in thermoplastic polymers.**

(57)   The invention provides a continuous process for incorporating an additive into particles of a thermoplastic polymer by high speed/high intensity gas entrained mixing of the particles and the additive.

EP 0 471 463 A2

This invention relates to a continuous process for incorporating an additive, which may be liquid or solid, into particles of thermoplastic polymers by high-speed/high-intensity gas entrained mixing of the particles with the additive.

The traditional method for incorporating dry additives into a polymer involves blending the polymer with the additives in the melt, using an extruder (continuous process), or a batch-type mixer such as the Banbury mixer or other mixing apparatus. Other methods use solvents to dissolve the components so that thorough mixing can be achieved. The disadvantages of these techniques include appreciable downtime for cleaning an extruder screw and barrel, high energy cost for running batch-type mixers, maintenance costs, and solvent handling problems.

Two non-extrusion routes for the incorporation of additives in polymers are known, namely in-reactor addition and post-reactor addition. In in-reactor addition the additive is added to the polymerization reactor, so that the resulting polymer already has the additive incorporated in it, see US-A-4,818,799, US-A-4,853,426 and US-A-4,879,141. In post-reactor additions, additives are incorporated into the polymer in separate equipment after polymerization, for example by coating polymer particles with the additives in a binder.

US-A-3,591,409 discloses the use of a hydrocarbon wax of specific melting temperature range to coat polymer resin particles onto which coated particles pigment and other additives are deposited in a high intensity batch mixer like the Prodex-Henschel mixer. The residence time in the mixer is relatively long, typically 5-30 minutes.

US-A-4,517,246, Matsuyama teaches polyolefin molding material coated with organic binder and additive such as filler. A high intensity batch type mixer (Super Mixer) was employed. Mixing time was typically 12-22 minutes.

It has long been desired to find a continuous process for economically blending additives with polymers without having to melt compound the polymer and without resorting to a process requiring the use of solvents which must be recycled and often present environmental emission problems.

The present invention, directed toward a continuous high speed mixing/coating process, has lower energy and capital cost requirements compared to a single- or twin-screw extrusion process, and provides a novel solution to an old problem.

According to the invention there is provided a continuous process for incorporating at least one additive into a thermoplastic polymer which comprises mixing particles of a thermoplastic polymer with an additive in a continuous feed high-speed/high-intensity mixer to incorporate said additive onto or into said polymer particles while said particles and additive are suspended or entrained in a gaseous medium.

In the present invention additives are incorporated into a granular polymer, e.g. polypropylene particles, by high speed impingement. The polymer particles and additives are subjected to high speed/high intensity mixing. The melting of the additive and/or the surface of the polymer promotes the incorporation of the additive into the polymer. The resulting polymer granules can be sold directly to customers without extrusion into pellets. The process can be achieved using mixers such as the "Turbulizer" (Registered Trade Mark) manufactured by Bepex Corporation. Only very short residence times are needed.

The present invention thus relates to an improved process for incorporating stabilizers and other additives into polymers after the polymerization reaction. Additives such as antioxidants can readily and homogeneously be incorporated by this process into thermoplastics such as polypropylene (PP) via high speed impingement mixing, thereby reducing the time and the cost required for adding stabilizers and other additives to polyolefins.

During high-speed mixing in e.g. the "Turbulizer" mixer, additive incorporation is aided by the partial surface melting of the polymer particles and also by the melting of relatively low melting additives, if the additive is normally solid, due to high energy impacts between particles and impacts of particles with mixer paddles and walls. Polymer or additive melting may not be necessary especially for high melting additives which have a very fine particle size. The additive incorporation is due primarily to particle-particle interactions.

This process operates continuously, no binder is needed and residence time is short. Preferably the average residence time of the polymer particles in the mixer is less than 5 minutes, more preferably between 1 second and 2 minutes, especially between 2 and 30 seconds.

This process is particularly useful for ultra high melt flow polypropylene, which is difficult or impossible to pelletize.

The "Turbulizer", manufactured by Bepex Corporation, is a high speed continuously fed intensive mixer having a rotor shaft with four rows of removable paddles on a horizontal shaft. The paddle configuration can be altered to suit various mixing needs. The mixing action in the "Turbulizer" is primarily due to the mechanical work of the paddle tips and mixer wall on the polymer particles and additives. The additive incorporation is due primarily to particle-particle interactions. The residence time, mixing temperature, and energy input are easily adjusted by changing the paddle configuration, polymer feed rate, rotor RPM or mixer jacket temperature. Under preferred operating conditions the internal parts of the mixer are not coated with melted polymer. Preferably the continuous energy input to the mixer is 1.64 to 82, more preferably 16.4 to 49, W/kg/h at 10 seconds residence time (0.001 to 0.05 and 0.01 to 0.03 Hp/lb/h, respectively at 10 seconds residence time). This equipment has a lower operating and capital cost than extruders and can operate at through put rates of commercial resin production.

This type of mixer uses a high speed rotor with rows of paddles which effectively sweep the entire surface of the cylindrical mixing chamber. Rotor shaft RPM may vary depending on the diameter of the chamber with smaller mixers operating at higher speeds. Rotor speeds in the 0.2 m (8 inch) diameter mixer ranged from 500 RPM to 4000 RPM. The feed particles are entrained in air or another gas and are swept around the outermost portion of the mixing chamber at very high speed. The paddle tips suitably have a velocity of 4.6 to 46 m/s (15 to 150 feet per second), preferably 10.7 to 32 m/s (35 to 105 feet per second), and most preferably 15 to 27 m/s (50 to 90 feet per second). The particles eventually exit the mixing chamber after a short residence time. While in the mixing chamber, a small quantity of material is subjected to a large amount of mechanical energy while suspended against the wall of the chamber.

The energy input to the polymer in the "Turbulizer" increases with both rotor speed (RPM) and residence time. The residence time is a function of paddle setting, polymer feed rate and rotor RPM.

Within the scope of the invention, it is contemplated that the stabilized polymer particles contain an additive which can be one of a variety of compounds, including but not limited to antioxidants, processing stabilizers, acid acceptors, nucleating agents, metal deactivating agents, thermal stabilizers, light or ultraviolet stabilizers, antiblock agents, antistatic agents, lubricants and slip agents which are capable of enhancing the properties and processability of the polymer and the like.

Other additives which may be used in accordance with this invention include:

fillers, such as talc, barium sulfate, clays, calcium carbonate, silicates and mica;

pigments, such as titanium dioxide, carbon black, lead chromate, cadmium sulfide, cadmium selenide and zinc sulfide;

other stabilizers such as basic lead carbonate, tribasic lead sulfate, basic lead chlorosilicate, dibutyl tin oxide and other salts of lead, zinc, cadmium and tin;

flame retardants such as antimony oxide; and

any other additives which enhance the properties and processability of the polymer to which they are to be added.

Additives can be solid particles or liquids which may be sprayed or metered into the mixing chamber. High melting or non melting solid additives should have a small particle size for better incorporation into the polymer particles. Low melting solid additives may coat the polymer particles after being softened or melted by the mixing action. Low melting solid additive particles may be fine, about 1 micrometer in average size or less, or coarse, larger than about 1 millimeter in average size. High melting additives are preferably fine and may be incorporated into the polymer by high speed impingement, e.g. into pores in the polymer. Larger, high melting additive particles may require some melting of the polymer particle and surfaces for effective incorporation. Typically within the scope of this invention, the concentration of the additive can range from 0.01 to 20, preferably 0.1 to 10, weight percent of the weight of the polymer particles containing the additive.

The additives an also include homopolymers or copolymers of, for example, propylene or 1-butene.

The polymer to be treated with additives can be any thermoplastic polymer, for example homopolymers or copolymers derived from olefins having 2 to 18 carbon atoms, such as polypropylene, polybutylene, polyethylene or an ethylene-carbon monoxide copolymer. Other core polymers which can be used include but are not limited to:

chlorosulfonated polyethylene, ethylene-propylene copolymer rubbers, ethylene-propylene-diene terpolymers, and butyl, butadiene-styrene, silicone or acrylonitrile rubbers. Polyvinyl chloride polymers and copolymers, polyethylene and copolymers, polypropylene, polyvinylidene chloride, polystyrene, polyimides, polyamides, polyacetals, acrylonitrile-butadiene-styrene, polycarbonates, chlorinated polyethylene, polymethyl-methacrylate or polyaromatic sulfones can also be used. The average size of the core particle can range from 400 micrometers to 5 millimeters. It is preferred to use particles having an average particle size of 600 micrometers to 3 millimeters. Stabilizing polymers according to the present process require less stabilizer than conventional methods for producing compounded stabilized polymers. Stabilizers coated on the outer surface prevent degradation as do stabilizers which are blended throughout the polymer particle or pellet. This feature could be important if unstable degradable products, e.g. disposables, are to be manufactured from stabilized bulk polymer.

The invention will be described in greater detail by reference to the following Examples in which all parts and percentages given are by weight unless otherwise specified.

EXAMPLES

Equipment and Procedure

Post-reactor stabilization experiments were conducted using a 0.2 m, 11.2 kW (8 inch, 15 horsepower) "Turbulizer" intensive mixer Model TCJS-8, manufactured by Bepex Corporation, Minneapolis, Minnesota. First, a dry blend of unstabilized polypropylene granules and additives was prepared by tumbling in a ribbon blender, Bepex Model IMJS-2.0. The polypropylene/additive solid mixture was then metered into the "Turbulizer" mixer continuously via an Acrison feeder. Additives were incorporated into the polypropylene particles via high speed impingement. The additive-containing polypropylene resin was discharged continuously at the bottom of the "Turbulizer".

The "Turbulizer" was operated at 136 kg/h (300 lb/hr) polypropylene throughput and 1800 RPM.

In the "Turbulizer" there are four rows of paddles on a single horizontal shaft in two planes at 90° to each other. Each row has ten paddles. The number one two and three paddles in each row were pitched at about 45° forward so as to propel the contents foreword toward the exit of the mixer. The number 9 paddles were all flat and the tenth set had two flat paddle and two with reverse pitch. The remaining five sets of paddles were varied, for example, with two paddles, numbers 4 and 5, in a flat pitch configuration parallel to the axis of rotation with the other three, numbers 6, 7 and 8, in a backward pitch. The polypropylene particles were homopolymer unstabilized powdered polypropylene having a nominal melt flow of 3 grams per 10 minutes (ASTM D-1238 condition L).

The unstabilized granular polypropylene had an average particle size of about 1 mm. The jacket temperature of the "Turbulizer" was controlled by introducing steam. Without any steam (jacket at ambient temperature) the temperature of the polypropylene rose about 16°C due to mechanical energy input in the "Turbulizer".

Thermo-oxidative stability of polypropylene processed in accordance with the invention was measured by standard hot air oven aging in the solid state. Before testing, polypropylene from the Turbulizer was compression molded into 254 μm (10 mil) thick plaques 5.1 cm x 5.7 cm (2 inch x 2.25 inch). For oven aging the plaques were placed in a forced circulation hot air oven maintained at 150°C. The aging procedure followed the guidelines of ASTM D3012. The samples were inspected each workday, and failure was indicated by characteristic brittleness and powdery disintegration of polypropylene.

The efficacy of incorporation of the sodium benzoate nucleating agent was measured by thermal analysis using a differential scanning calorimeter (Perkin-Elmer 7 Series). Both isothermal crystallization half time (ICHT) and crystallization temperature ($T_c$) were measured. Compared to the neat polymer, a lower ICHT or higher $T_c$ indicates nucleating effect. For ICHT measurement the polypropylene resin was melted at 220°C, held 5 minutes, and then cooled to 130°C at which temperature the polymer crystallized. For $T_c$ measurement the polypropylene was melted at 220°C, and cooled at 10°C/minute. The exothermic peak temperature was taken as the $T_c$.

Examples 1-9

These experiments were conducted using a relatively low-melting additive package. This package contained "Irganox" 1010 ("Irganox" is a Registered Trade Mark), a primary hindered phenolic antioxidant (500 ppm), DSTDP, distearylthiodipropionate synergist (1200 ppm), calcium stearate, an acid acceptor (700 ppm) and butylated hydroxytoluene (BHT), a processing stabilizer (1000 ppm), giving a total of 3400 ppm of additive in the polypropylene. Results are shown in Table I.

## TABLE I

### Effect of Turbulizer Paddle Configuration And Jacket Temperature on Stabilization of Polypropylene (PP)

| Example | Paddle Configuration | Average Residence Time (Sec.) | Jacket Temp. °C | PP Product (Output) Temp. °C | Product Bulk Density Kg/m$^3$ (lb/ft$^3$) | Oven Stability at 150°C (days) |
|---------|---------------------|-------------------------------|-----------------|------------------------------|--------------------------------------------|--------------------------------|
| 1 | 2 Flat/3 Back | 10.6 | 22 | 40 | 367(22.9) | 23 |
| 2 | " | 10.6 | 102 | 59 | 356(22.2) | 41 |
| 3 | " | 10.6 | 153 | 71 | 357(22.3) | 31 |
| 4 | All Flat | 4.0 | 22 | 33 | 383(23.9) | 12 |
| 5 | " | 4.0 | 102 | 51 | 364(22.7) | 4 |
| 6 | " | 4.0 | 153 | 60 | 372(23.2) | 0.5 |
| 7 | All Forward | <1 | 22 | 36 | 359(22.4) | 14 |
| 8 | " | <1 | 102 | 41 | 357(22.3) | 6 |
| 9 | " | <1 | 153 | 47 | 354(22.1) | 5 |
| Polypropylene/additives feed mixture | | – | – | – | 362(22.6) | 2 |
| Unstabilized Polypropylene | | – | – | – | – | 0.2 |

At the given throughput rate of polypropylene each paddle configuration produced a different residence time. The residence time was measured as the ratio of holdup to mass flow rate. At each paddle configuration three jacket temperatures were used for processing. Compared to all forward or all flat paddle configuration, the 3 back paddle configuration produced more efficient additive incorporation as measured by the oven aging data. The efficacy of additive incorporation increased with increasing residence time in the range studied. Two runs at 153°C confirmed the reproducibility of the experiment.

The temperature of the stabilized polypropylene exiting the "Turbulizer", or the product temperature, increased with increasing jacket temperature. With 22°C (ambient) jacket temperature the product temperature was 34-40°C. Thus, the polypropylene granules were heated due to conversion of the mechanical energy into heat.

Plaques made from the physical blend, or feed, of unstabilized polypropylene and the additives (without treatment in the Turbulizer) prepared in the ribbon blender had only 2 days of oven stability at 150°C. The intensive mixing in the "Turbulizer" was critical for additive incorporation and stabilizing the polymer.

Note that at 10.6 seconds residence time, good incorporation of additive took place without the use of any binder.

The bulk density of the feed polypropylene granules was essentially unchanged after passage through the "Turbulizer" mixer.

Examples 10-13

These experiments were conducted using a relatively higher melting additive system. The additive system consisted of "Ethanox" 330 (1000 ppm), sodium benzoate (1000 ppm) and "Ultranox" 626 (800 ppm) ("Ethanox" and "Ultranox" are Registered Trade Marks). "Ethanox" 330 is a primary hindered phenolic antioxidant. Sodium benzoate is a nucleating agent and acid acceptor for polypropylene. "Ultranox" 626 is a phosphite processing stabilizer.

These experiments were run using a 3-back/2-flat paddle configuration as in Examples 1-3, 1800 RPM rotor speed, and 136 kg/h (300 lbs/hour) polypropylene throughput. At the paddle setting used, the average residence time of polypropylene in the "Turbulizer" was about 11 seconds. Results are shown in Table II.

<u>TABLE II</u>

Effect of Jacket Temperature on Additive
Incorporation Efficacy in Granular Polypropylene

| Example | Jacket Temp °C | PP Product (output) Temp °C | Product Bulk Density kg/m$^3$ (lb/ft$^3$) | $T_c$ (°C) | ICHT At 130°C (Sec.) | Oven Stability At 150°C (Days) |
|---|---|---|---|---|---|---|
| 10 | 22 | 38 | 356(22.2) | 126.5 | 62 | 18 |
| 11 | 100 | 53 | 344(21.5) | 125.2 | 61 | 15 |
| 12 | 153 | 78 | 346(21.6) | 125.7 | 61 | 18 |
| 13 | 162 | 87 | 346(21.6) | 125.4 | 62 | 17 |
| PP/additive feed mixture | – | – | 346(21.6) | – | – | 7 |
| Unstabilized PP | – | – | | 110.9 | 1158 | 0.2 |
| PP/additive extruded pellets | – | – | | 126.6 | 61 | 21 |

A decrease of ICHT and an increase of crystallization temperature ($T_c$) compared to additive-free unstabilized polypropylene, show that the nucleating agent was active in the granular polypropylene.

With increasing jacket temperature, the product temperature increased, but the additive incorporation efficacy was essentially unchanged, as indicated by the $T_c$, ICHT and oven stability data. Even at 22°C jacket temperature good additive incorporation took place. The operability at low temperature is a desirable feature of this invention.

The Long Term Heating Aging data reflect mainly the performance of the antioxidant "Ethanox" 330.

The stability of the polyproplylene processed in accordance with the invention was higher than the feed granules, demonstrating the beneficial effect of the intensive mixing even at low residence time. Furthermore, polypropylene granules and additives in the same concentration were extruded into pellets which were subjected to similar testing as the "Turbulizer" processed granules. The nucleating effect and oven stability of the "Turbulizer" processed polypropylene were comparable to those of the extruded polypropylene, within experimental error limits. The bulk density of the polypropylene granules was essentially unchanged after processing in the "Turbulizer".

The morphology of the stabilized granular product was examined by scanning electron microscopy to confirm the additive deposition on the PP granules. It was found that additive particles were included in the surface of the PP granules confirming incorporation of additives. Although the average particle size decreased slightly during passage through the "Turbulizer" mixer, no significant level of extra fines were generated. Apparently no detectable interparticle agglomeration took place.

Again, it is shown that at very short residence time of 10.6 seconds excellent incorporation of additives took place without a binder. These features are a considerable improvement over prior art.

Some skin formation due to partial melting of polypropylene on the "Turbulizer" barrel surface occurred sometimes at 22°C, but surprisingly not at higher temperatures.

In the above experiments the additives were preblended with unstabilized polypropylene powder, since the equipment size did not allow the feeding of low additive level. In a manufacturing plant, feeding of separate and continuous streams of polypropylene and additives into the "Turbulizer" mixer will be more appropriate, thereby avoiding the premixing step.

The heat of fusion of the "Turbulizer"-treated polypropylene was lower than that of extruded polypropylene. A granular polypropylene sample processed in the "Turbulizer" showed about 3% lower heat of fusion than the pelletized resin. This is a small but significant benefit. This decrease occurs because the nascent morphology polypropylene has lower crystallinity than polypropylene which has one heat history. This lower heat of fusion of the pelletized polypropylene will reduce energy requirement for fabricating the polypropylene resin.

Liquid additives can be sprayed through a nozzle in the "Turbulizer" onto the polypropylene granules inside the Turbulizer. The process of the invention can utilise liquid and solid (both high and low melting) additives. The additives can also be dissolved or suspended in a carrier or binder.

## Claims

1. A continuous process for incorporating at least one additive into a thermoplastic polymer which comprises mixing particles of a thermoplastic polymer with an additive in a continuous feed high-speed/high-intensity mixer to incorporate said additive onto or into said polymer particles while said particles and additive are suspended or entrained in a gaseous medium.

2. A process according to claim 1, wherein the thermoplastic polymer is a homopolymer of an olefin having 2-18 carbon atoms or a copolymer of at least one olefin having 2-18 carbon atoms and at least one comonomer.

3. A process according to claim 2, wherein the thermoplastic polymer is polypropylene, polybutylene, polyethylene or an ethylene-carbon monoxide copolymer.

4. A process according to claim 1, 2 or 3, wherein the additive is selected from antioxidants, processing stabilizers, acid acceptors, nucleating agents, metal deactivating agents, thermal stabilizers, light or ultraviolet stabilizers, lubricants, antiblock agents, antistatic agents, slip agents, fillers and pigments.

5. A process according to any one of the preceding claims wherein said additive is dissolved or suspended in a carrier or binder.

6. A process according to any one of the preceding claims wherein the average residence time of the particles in the mixer is less than 5 minutes.

7. A process according to claim 6, wherein the average residence time is between 1 second and 2 minutes.

8. A process according to claim 7, wherein the average residence time is between 2 and 30 seconds.

9. A process according to any one of the preceding claims wherein the continuous energy input to the mixer is 1.64 to 82 W/kg/h (0.001 to 0.05 Hp/lb/hr) at 10 seconds residence time.

10. A process according to claim 9, wherein the continuous energy input to the mixer is 16.4 to 49 W/kg/h (0.01 to 0.03 Hp/lb/hr) at 10 seconds residence time.

11. A process according to any one of the preceding claims, wherein said mixer comprises a rotor with paddle blades wherein the paddle tip speed is from 4.6 to 46 m/s (15 to 150 feet per second).

12. A process according to claim 11 wherein said paddle tip speed is from 10.7 to 32 m/s (35 to 105 feet per second).

13. A process according to claim 12, wherein said paddle tip speed is from 15 to 27 m/s (50 to 90 feet per second).